# EUROPÄISCHE PATENTSCHRIFT

(11) **EP 0 476 091 B1**
(45) Veröffentlichungstag und Bekanntmachung des Hinweises auf die Patenterteilung: **04.01.1995**
(21) Anmeldenummer: 91906479.0
(22) Anmeldetag: 08.04.1991
(51) Int. Cl.: H04L 7/04

(54) **BIT- UND RAHMENSYNCHRONISIEREINHEIT FÜR EINEN ZUGRIFFSKNOTEN EINER OPTISCHEN ÜBERTRAGUNGSEINRICHTUNG**
BIT AND FRAME SYNCHRONIZING UNIT FOR AN ACCESS NODE IN AN OPTICAL TRANSMISSION DEVICE
UNITE DE SYNCHRONISATION DE BITS ET DE BLOCS POUR LES NOEUDS D'ACCES DE DISPOSITIFS DE TRANSMISSION OPTIQUE

(30) Priorität: 09.04.1990 CH 1192/90
(43) Veröffentlichungstag der Anmeldung: 25.03.1992
(73) Patentinhaber: ASCOM TECH AG, CH-3018 Bern (CH)
(72) Erfinder: VOGEL, Paul, CH-3612 Steffisburg (CH); MARTINSON, Thomas, CH-1700 Fribourg (CH)
(74) Vertreter: Schwerdtel, Eberhard, Dr.
(86) Internationale Anmeldenummer: CH9100083
(87) Internationale Veröffentlichungsnummer: WO9115907

(56) Entgegenhaltungen:
- EP-A- 0 308 650
- US-A- 3 575 554
- IEEE Transactions on Communications, Band COM-34, Nr. 12, Dez. 1986, (New York, US); G. Ling et al.: "Slot synchronization in optical PPM communications", Seiten 1202-1208.
- Journal of Lightwave Technology, Band 7, Nr. 11, Nov. 1989, IEEE, (New York, US),; N. Fujimoto et al.: "Photonic highway: Broad-band ring subscriber loops using optical signal processing" - Seiten 1798-1805
- International Symposium on Circuits and Systems, Band 3, 7.-9. Juni 1988, (Espoo, FI); B. Wilson et al.: "Low input resistance transimpedance optical preamplifier for fiber optic local area networks", Seiten 2531-2534.
- Electronics Letters, Band 23, Nr. 22, 22. Okt. 1987; P.F. Driessen: "Binary frame synchronisation sequences for packet radio" - Seiten 1190-1191.

## Beschreibung

Die Erfindung betrifft eine Bit- und Rahmensynchronisiereinheit für einen Zugriffsknoten einer optischen Übertragungseinrichtung.

Übertragungseinrichtungen und diverse Arten der Informationsübertragung über Übertragungsstrecken sind allgemein bekannt. In neuerer Zeit werden aus verschiedenen Gründen optische Übertragungsstrecken zunehmend wichtig. Neben den optischen Punkt/Punkt-Verbindungen sind auch kompliziertere Netzstrukturen mit optischen Leitungen bekannt. So beschreibt z.B. B. Viklund in einem Artikel "Optical fibres in local area networks", Communications/Communications International, October 1985, Seite 19 ff. verschiedene Netzstrukturen mit Glasfaserkabeln für Verteilnetze und für Netze mit individuell aufbaubaren Verbindungen zwischen diversen Teilnehmern. Bei letzteren ist vor allem eine Ringstruktur günstig. Die Teilnehmerstellen einer optischen Übertragungsleitung der letztgenannten Art sind über optoelektrische Koppler an die jeweils verwendete Faser angeschlossen.

Auf der Basis von z.B. InP-Halbleitermaterial gibt es heute Bauelemente für optische Systeme, z.B. Koppler, Weichen und Modulatoren, die zur Lichtbeeinflussung elektrooptische Effekte ausnützen. Diese Elemente arbeiten bis zu Frequenzen im Gigahertz-Bereich.

Zur Übermittlung von Information ist die Verwendung von adresscodierten Paketen allgemein bekannt. Solche Pakete weisen einen Kopfteil (header) und einen Infoteil auf, wobei der Kopfteil alle für das jeweilige Paket und die beteiligten Einrichtungen notwendigen Daten enthält, z.B. eine Zieladresse, Angaben über die Art des Paketes, Überwachungsbits usw. Der Infoteil steht für die zu übertragende Nutzinformation zur Verfügung.

Beim Empfang einer über eine optische Leitung ankommenden Information ist es unumgänglich, dass dabei wenigstens ein Teil des die Information tragenden Lichtstromes verbraucht wird. Weiter muss jede empfangende Teilnehmerstelle auf den Bittakt und auf den Takt der vorbeilaufenden Pakete synchronisiert sein.

Die Aufgabe der Erfindung besteht nun darin, unter Ausnützung der genannten Bauelemente eine Übertragungseinrichtung anzugeben, die weitgehend ohne elektrische Regeneratoren auskommt. Insbesondere soll eine Bit- und Rahmentakt-Synchronisiereinheit angegeben werden, die im Aufbau einfach und in der Wirkungsweise unkompliziert ist.

Die Lösung dieser Aufgabe wird durch den kennzeichnenden Teil von Anspruch 1 gegeben. Die abhängigen Ansprüche geben Ausgestaltungen der Erfindung an.

Mit der erfindungsgemässen Lösung ergibt sich die Möglichkeit, flexible Übertragungseinrichtungen anzugeben, die wegen ihres vermehrt optischen Aufbaus gegenüber den vergleichbaren, bisher bekannten Einrichtungen erhebliche Vorteile bringen. Insbesondere ist zu erwähnen eine hervorragende Immunität gegen elektromagnetische Interferenzen. Die Synchronisiereinheit arbeitet sodann mit einem Integrierer, der im Vergleich zum Bittakt langsam ist und von Natur aus problemlos auf Verzerrungen und ähnliches reagiert. Hierdurch ist die Synchronisiereinheit geeignet für schnelle Übertragungsleitungen bis zu Taktfrequenzen von z.B. mehreren GigaBit. Vorteilhaft ist ausserdem, dass die Synchronisierung auf den Bit- und den Rahmentakt gemeinsam und gleichzeitig erfolgt.

Im folgenden wird die Erfindung anhand von sieben Figuren beispielsweise näher beschrieben. Es zeigen:
Fig. 1 - schematische Darstellung einer optischen Übertragungseinrichtung
Fig. 2 - schematische Darstellung eines optischen Richtungskopplers, sehr stark vergrössert
Fig. 3 - Symboldarstellung des Richtungskopplers
Fig. 4 - Blockschaltbild einer ersten Bit- und Rahmensynchronisiereinheit
Fig. 5 - zugeordnete Funktionsabhängigkeit
Fig. 6 - Blockschaltbild einer zweiten Bit- und Rahmensynchronisiereinheit
Fig. 7 - Funktionsabhängigkeit der zweiten Bit- und Rahmensynchronisiereinheit.

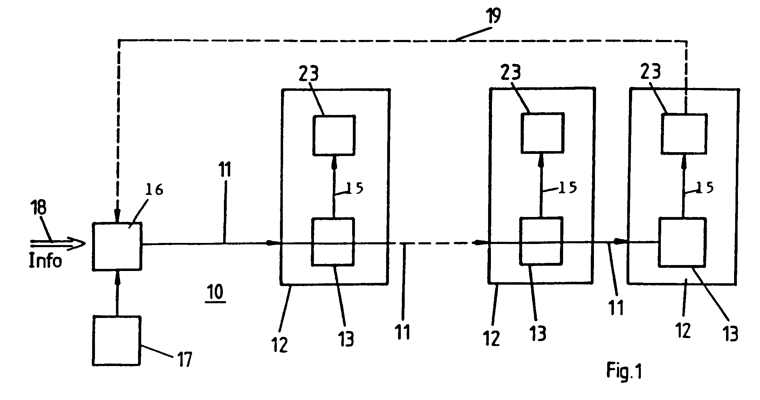

Fig. 1 zeigt schematisch eine Übertragungseinrichtung 10, auf der Information in Form adressierter Pakete in Pfeilrichtung übertragen wird. Als Übertragungsmedium dient eine optische Faser 11, insbesondere eine Monomodefaser. In diese Faser 11 ist seriell eine Mehrzahl von Zugriffsknoten 12 eingefügt, wodurch die Faser 11 zwar in Abschnitte unterteilt wird, der Lichtstrom insgesamt jedoch nicht unterbrochen wird. Jedem Zugriffsknoten 12 ist eine Adresse zugeordnet, durch die er von allen jeweils anderen Knoten unterschieden ist. Es ist jedoch auch möglich, dass mehreren Knoten 12 eine gleiche Adresse zugeordnet ist.

Der Lichtfluss beginnt bei einer Sendeeinheit 16, insbesondere einem Halbleiterlaser, der einen im wesentlichen konstanten Gleichlichtstrom in den Anfang der Faser 11 einspeist und einem zugeordneten Modulator zum Modulieren dieses Gleichlichtstromes. Der modulierte Lichtstrom durchläuft die Faser 11 und passiert dabei unterbruchlos sämtliche Zugriffsknoten 12. Diese Knoten weisen Zugriffseinheiten 13 auf, die wie beschrieben den Lichtstrom nicht unterbrechen. Mit Hilfe dieser Zugriffseinheiten 13 ist jeder Knoten 12 in der Lage, im Lichtstrom enthaltene Information zu lesen. Diese Information kann zum einen in Paketen enthaltene Nutzinformation sein. Zum anderen kann diese Information Adressen, Angaben über die Pakete, Synchronisierungssignale usw. darstellen. Zum Empfang und zur Auswertung der Information dienen die Informationsempfänger 23, die über Verbindungen 15 mit den Zugriffseinheiten 13 verbunden sind.

Es ist günstig, wenn die Modulation des Lichtstromes so gewählt wird, dass vorhandenes Licht bzw. hohe Lichtleistung bzw. hohe Lichtintensität bzw. hell den Zustand logisch 1 und nichtvorhandenes Licht bzw. niedrige Lichtleistung bzw. niedrige Lichtintensität bzw. dunkel den Zustand logisch 0 darstellt.

Der Bittakt des Lichtstromes und die Pakete entstehen in der Sendeeinheit 16, indem deren Modulator durch eine Takterzeugungseinheit 17 und in Abhängigkeit von der als Balkenpfeil 18 angedeuteten, zu übertragenden Information gesteuert wird. Statt Pakete können auch Rahmen zur Gliederung des Lichtstromes dienen.

Die optische Faser 11 kann kreisförmig verlegt und der Empfänger 23 des letzten Zugriffsknotens 12 durch eine z.B. kurze elektrische Verbindung 19 mit der Sendeeinheit 16 verbunden sein. Hierdurch entsteht eine Ringanordnung, bei der die Sendeeinheit 16 die einzige Lichtquelle enthält. Der Empfänger 23 des letzten Zugriffsknotens 12 kann aber auch elektrisch mit der Sendeeinheit 16 einer weiteren Übertragungseinrichtung 10 verbunden sein, wodurch eine Verdoppelung der linearen Ausdehnung erreicht wird. Bei einer solchen Einrichtung wechseln dann aktive, mit einem Lichtsender ausgerüstete Sendeeinheiten 16 und passive, keinen Lichtsender enthaltende Knoten 12 einander ab.

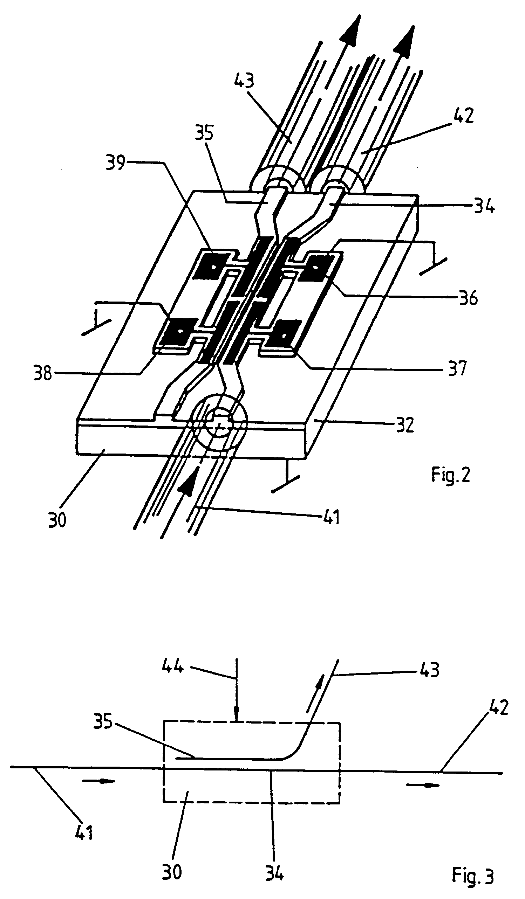

Fig. 2 zeigt in schematischer, stark vergrösserter Darstellung einen integrierten optischen Richtungskoppler 30 als Herzstück der genannten Zugriffseinheiten 13. Der Richtungskoppler 30 weist auf einem Halbleitersubstrat 32 z.B. einem InP-Substrat, zwei benachbarte, optische Rippenwellenleiter 34, 35 auf, die von insgesamt vier metallischen Steuerelektroden 36 bis 39 bedeckt sind, über die elektrische Steuerspannungen anlegbar sind. Der Richtungskoppler ist auf seiner Eingangsseite mit dem einen Rippenwellerleiter 34 an eine ankommende Faser, insbesondere eine Monomodefaser 41 angeschlossen. Auf seiner Ausgangsseite ist er mit beiden Rippenwellenleitern 34, 35 an je eine abgehende Faser 42 bzw. 43 angeschlossen.

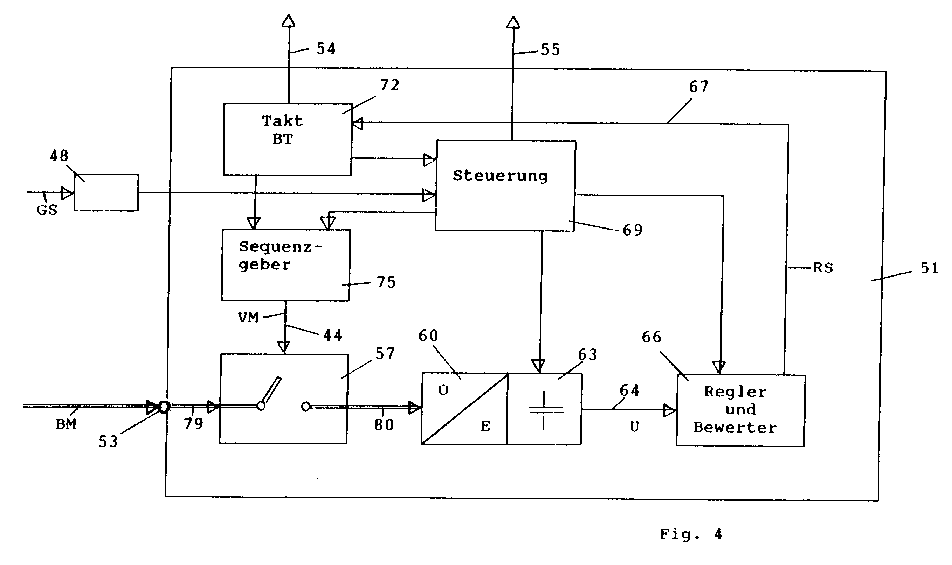

Der beschriebene, beispielsweise Richtungskoppler 30 arbeitet als Lichtweiche, wobei in Abhängigkeit von den an die Steuerelektroden 36 bis 39 angelegten Spannungen der über die Faser 41 ankommende Lichtstrom in beliebigem Verhältnis auf die beiden abgehenden Fasern 42, 43 aufteilbar ist. Fig. 3 zeigt eine Symbol-Darstellung des Richtungskopplers 30, die die Weichenfunktion zum Ausdruck bringen soll. Der Pfeil 44 symbolisiert dabei die elektrische Ansteuermöglichkeit, die über die Steuerelektroden 36 bis 39 (Fig. 2) gegeben ist.

Wird der Richtungskoppler 30 jeweils voll durchgeschaltet, dann ergeben sich zwei "digitale" Schaltstellungen, und zwar eine, bei der der Lichtpfad vom Eingang des Kopplers zum jeweiligen Ausgang für einen Lichtstrahl durchlässig ist und eine zweite, bei der dieser Pfad gesperrt ist.

Fig. 4 zeigt ein Blockschaltbild einer Bit- und Rahmensynchronisiereinheit 51. Diese dient in jedem Zugriffsknoten 12 zur Synchronisierung auf den Lichtstrom der Faser 11, und zwar gleichzeitig auf den Bittakt und auf den Paket- bzw. den Rahmentakt. Die Bit- und Rahmensynchronisiereinheit 51, im folgenden als Sync-Einheit bezeichnet, besitzt einen optischen Eingang 53, der der Verbindung 15 von Fig. 1 entspricht, und zwei elektrische Ausgänge 54, 55. In der Darstellung sind die elektrischen Verbindungen als einfache Pfeile und die optischen Verbindungen als Balkenpfeile dargestellt.

Die Sync-Einheit 51 umfasst ein elektrisch steuerbares, optisches Schaltglied 57, einen optoelektrischen Wandler 60, ein Integrationsglied 63, einen Regler und Bewerter 66, eine Steuerung 69, einen Taktgeber 72 und einen Sequenzgeber 75. Hierzu kommt noch ein Grobregler 48.

Der Taktgeber 72 ist mit der Steuerung 69, dem Regler und Bewerter 66 und mit dem Sequenzgeber 75 verbunden, Letzterer (75) ist mit dem Schaltglied 57 verbunden und die Steuerung 69 mit dem Sequenzgeber 75, dem Integrationsglied 63 und mit dem Regler und Bewerter 66. Der Grobregler 48 ist mit der Steuerung 69 verbunden und die Ausgänge 54 und 55 mit dem Taktgeber 72 bzw. der Steuerung 69.

Der Taktgeber 72 gibt auf seine Ausgänge einen Bittakt ab, der stets in etwa dem (bekannten) Bittakt BT der Takterzeugungseinheit 17 und damit dem Takt auf der Faser 11 entspricht. Über seinen Eingang 67 erhält er ein Regelsignal RS vom Regler und Bewerter 66, mit dessen Hilfe er sich jeweils exakt auf den jeweiligen, eventuell Schwankungen unterliegenden Bittakt BT der Faser 11 einstellt. Dieser Takt BT wird über alle Ausgänge des Taktgebers 72 abgegeben, insbesondere auch über den Ausgang 54 der Sync-Einheit 51.

Der Sequenzgeber 75 gibt im Bittakt BT des Taktgebers 72 ein serielles, elektrisches Vergleichsmuster VM an das Schaltglied 57 ab, wobei dieser Vorgang durch die Steuerung 69 und den Grobregler 48 gesteuert wird. Das Vergleichsmuster VM besteht aus einer Folge von z.B. zwanzig bis dreissig Bits, d.h. Werten logisch 0 und 1, beispielsweise der Folge 1110010011101000011111000000111. Diesem Vergleichsmuster VM entspricht vollständig ein optisches Bitmuster BM, das von der Sendeeinheit 16 herkommend als Synchronisiersignal regelmässig auf der Faser 11 erscheint.

Das optische Schaltglied 57 ist als Richtungskoppler 30 ausgebildet, wobei dieser, gesteuert über seinen Steuereingang 44, den optischen Pfad zwischen seinem Eingang 79 und seinem einzigen Ausgang 80 entweder freigibt oder sperrt.

Alternativ kann das optische Schaltglied 57 als beliebiges Element ausgebildet sein, das die beschriebenen Funktionen erfüllt. Solche Elemente sind beispielsweise steuerbare, optische Verstärker, optische Modulatoren, gesteuerte Spiegel usw.

Der optoelektrischer Wandler 60 ist bevorzugt eine schnelle Fotodiode mit einem geeigneten, nachgeschalteten Verstärker. In diesem Fall bildet die Ausgangskapazität der Diode und der räumlich eng an die Diode angekoppelte Verstärker zusammen das Integrationsglied 63. Durch den schaltungstechnischen Aufbau des Verstärkes lässt sich die "virtuelle" Grösse des Integrationsgliedes, dessen RC-Zeit und sonstige Parameter beeinflussen. Das Integrationsglied 63 gibt an seinem Ausgang Spannungsimpulse U ab, deren Höhen ein Mass für ein jeweiliges Integral bilden.

Der Regler und Bewerter 66 ist eine Einheit, die aus mehreren Eingangssignalen U, z.B. durch Vergleich jeweils aufeinanderfolgender Signale, ein Regelsignal RS bildet und auf die Verbindung 67 abgibt. Dieses Regelsignal RS kann z.B. eine Gleichspannung sein, die beim Taktgeber 72 in einen VCO (voltage controlled oscillator) eingespeist wird zum Zwecke der Variation des Bittaktes BT des Taktgebers 72.

Die Sync-Einheit 51 arbeitet wie folgt: Der noch zu beschreibende Grobregler 48 gibt durch ein Signal an die Steuerung 69 die Arbeit der Sync-Einheit 51 frei. Das von der Faser 11 abgezweigte Bitmuster BM wird der Sync-Einheit 51 über den Eingang 53 eingegeben und erreicht das Schaltglied 57. An dieses wird nun möglichst phasen- und taktgerecht, ausgehend vom Taktgeber 72, der Steuerung 69 und dem Sequenzgeber 75 das elektrisches Vergleichsmuster VM angelegt. Das Schaltglied 57 schaltet hierdurch bitweise und in Abhängigkeit von der logischen Bedeutung des jeweiligen Bits des Vergleichsmusters VM das Licht bzw. besser die Hell/Dunkel-Folge des optischen Bitmusters BT zum optoelektrischen Wandler 60 durch oder sperrt den optischen Pfad durch das Schaltglied 57.

Der optoelektrische Wandler 60 empfängt jeweils das durch das Schaltglied 57 durchgelassene Licht und wandelt dieses Licht proportional zu dessen jeweiliger Lichtleistung bzw. Lichtmenge in elektrische Ladung e um. Diese Ladung e baut im Integrationsglied 63 eine von den Mustern BM, VM und deren gegenseitiger Phasenlage gesamthaft abhängige elektrische Spannung des Wertes U auf. Der Regler und Bewerter 66 bewertet diese jeweilige Spannung U und gibt das genannte Regelsignal RS auf die Verbindung 67 ab. Der Taktgeber 72 passt hierauf seinen jeweiligen Bittakt BT sowie die Phasenlage gegenüber dem nächsten Bitmuster BM an.

Die Sync-Einheit 51 bildet auf die beschriebene Weise einen Regelkreis. Die Steuerung 69 sorgt hierbei dafür, dass das Integrationsglied 63 und der Regler und Bewerter 66 jeweils zeitgerecht, d.h. nur für die Dauer des Bitmusters BM aktiv geschaltet und anschliessend zurück in die jeweilige Ruhestellung gebracht wird (Funktion "clear").

Erscheinen das optische Bitmuster BM und das elektrische Vergleichsmuster VM phasen- und taktgleich an den jeweiligen Eingängen des Schaltgliedes 57, liegt also genauer Synchronismus vor, dann ergibt sich praktisch ein Zustand, wie er bei einem Korrelator als Autokorrelation bekannt ist. Dies bedeutet für die Spannung U, dass diese einen Extremwert erreicht, entweder einen Maximalwert Umax, weil alles Licht durchgelassen wird oder einen Minimalwert Umin, weil alles Licht gesperrt wird, also Lichtmenge Null. Welcher dieser Extremwerte erreicht wird, hängt dabei davon ab, welcher logische Wert, 1 oder 0, den Zuständen Licht bzw. kein Licht am Eingang 53 des Schaltgliedes 57 zugeordnet ist. Im folgenden wird angenommen, dass der Extremwert ein Maximalwert Umax ist.

Der Fall der genannten exakten Übereinstimmung zwischen Bitmuster BM und Vergleichsmuster VM ist der angestrebte Fall, bei dem sowohl der Bittakt BT als auch der Rahmen- oder Pakettakt RT voll synchronisiert ist. In diesem Fall erscheint am Ausgang 54 der Bittakt BT zur Steuerung weiterer, nicht gezeigter Einheiten des jeweiligen Zugriffsknotens 12 und am Ausgang 55 der Rahmentakt RT.

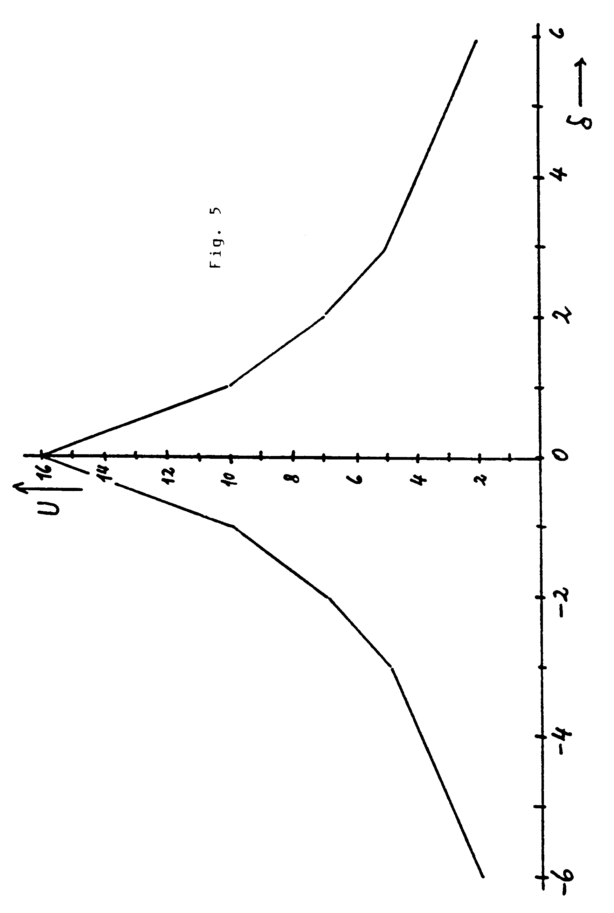

Fig. 5 zeigt die theoretische Abhängigkeit des jeweiligen Spannungswertes U am Ausgang 64 des Integrationsgliedes 63 von der Phasenabweichung δ zwischen dem Bitmuster BM und dem Vergleichsmuster VM. Als Bitmuster BM dient dabei die Bitfolge logisch 0000001110010011101000011111000000111000000, als Vergleichsmuster VM die genannte Bitfolge logisch 1110010011101000011111000000111. Abgesehen von den jeweils sechs Nullen an den Rändern sind diese beiden Bitfolgen gleich. Theoretische Abhängigkeit bedeutet dabei, dass die Bittakte BT frequenzmässig exakt übereinstimmen und dass keine Phasenabweichung der Bittakte besteht. Weiter erfolgt die Integration im Integrationsglied 63 vollständig und fehlerfrei. Die Spannung U ist als Ordinate in (beliebigen Werten) aufgetragen, die Grösse δ als Abweichung vom genauen Synchronismus in Phasen- bzw. Verschiebungsschritten von jeweils 1 Bit auf der Abszisse.

Die Abhängigkeit bzw. Kurve von Fig. 5 besitzt einen symmetrischen, vom Maximum Umax nach beiden Seiten "geschwungen" abfallenden Verlauf. Das Maximum ist scharf ausgeprägt. Der Regler und Bewerter 66 kann daher auf einfache Art Regel- und Bewertungssignale erzeugen, die die Sync-Einheit 51 jederzeit in Richtung maximaler Ausgangsspannungswerte U führen. Ist das Maximum erreicht, so bedeutet dies gleichzeitig sowohl optimale Bit- als auch Rahmensynchronisierung. Dies ist der gewünschte genaue Synchronismus.

Die Methode der Maximum-Suche ist als solche bekannt und basiert darauf, dass jeweils zwei oder mehr aufeinander folgende bzw. miteinander korrespondierende Messungen von U miteinander verglichen werden. Die Reihenfolge und die Höhen von U geben hierbei an, auf welcher Flanke der Kurve von Fig. 5 die Messwerte liegen. Damit entsteht eine Messgrösse dafür, in welcher Richtung das Maximum liegt. Die geschwungenen Flanken und das scharfe Maximum eignen sich dabei besonders für Regelprozesse, durch die auch geringfügige Abweichungen vom Gleichlauf der Bit- und Rahmentakte BT bzw. RT sehr schnell erkannt und rückgängig gemacht werden bzw. ausgeregelt werden können.

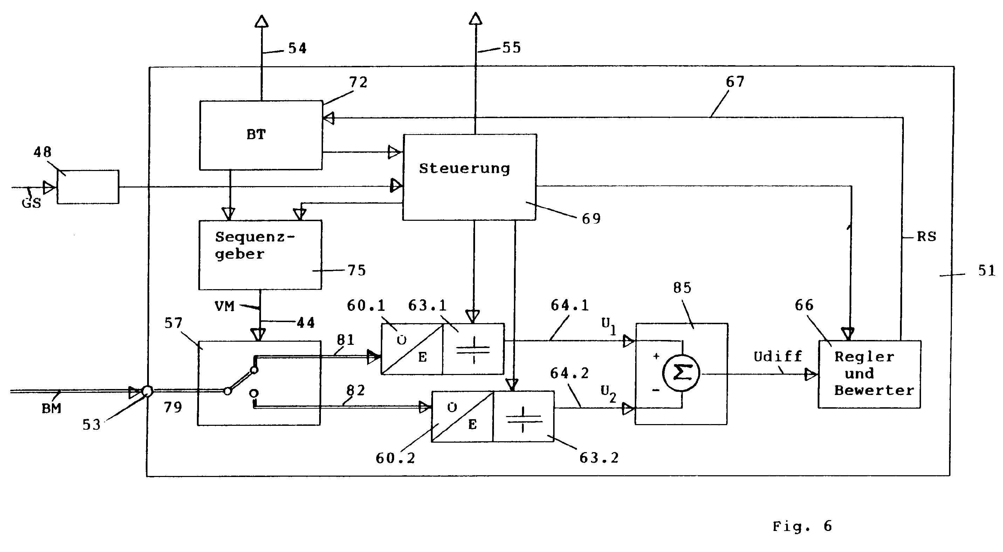

Fig. 6 zeigt das Blockschaltbild für eine zweite, etwas abgewandelte Sync-Einheit 51. Bei dieser bildet das Schaltglied 57 einen optischen Umschalter, dessen Eingang 53 und dessen zwei Ausgängen 81, 82 durch die Steuerung 69 und den Sequenzgeber 75 wahlweise optisch miteinander verbunden werden. Den Ausgängen 81, 82 sind zwei gleiche optoelektrische Wandler 60.1, 60.2 und zugeordnete Integrationsglieder 63.1, 63.2 nachgeschaltet. An deren Ausgänge 64.1, 64.2 ist eine Differenzbildungsstufe 85 angeschlossen, die die Differenz Udiff aus den beiden Ausgangsspannungen U1, U2 der Integrationsglieder 63.1, 63.2 bildet. Diese Differenz Udiff wird dem Regler und Bewerter 66 zugeführt.

Die ansonsten gleich wie die Sync-Einheit von Fig. 4 aufgebaute Einheit arbeitet ähnlich wie jene. Der Unterschied liegt darin, dass durch die gesteuerte, optische Umschaltung auf die beiden Ausgänge 81, 82 und durch die Differenzbildung in der Differenzbildungsstufe 85 ein schärferes Maximum der zugeordneten theoretischen Abhängigkeit der Spannung U von der Phasenabweichung δ resultiert. Weiter ergibt sich ein verbessertes Verhalten beim Auftreten des stets unvermeidbaren Rauschens (Geräusch).

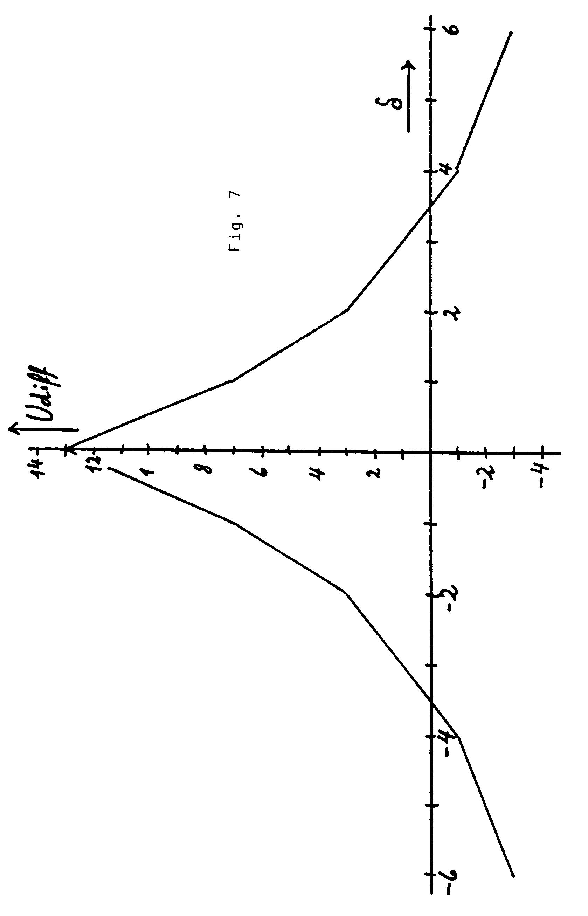

Fig. 7 zeigt die genannte, der Sync-Einheit 51 nach Fig. 6 zugeordnete Abhängigkeit. Als Bitmuster BM dient (als Beispiel) die Folge logisch 00000000001111111100001110110000000000, als Vergleichsmuster VM die Folge 00001111111100001110110000. Obwohl diese Folgen deutlich kürzer sind als die anhand von Fig. 5 beschriebenen Folgen, weist die wiederum symmetrische Kurve ein schärferes Maximum mit deutlich tiefer liegenden Seitenflanken auf, wobei diese Flanken wiederum von oben her gesehen konkav sind.

Eine Sync-Einheit 51 der beschriebenen Art arbeitet nur dann einwandfrei und schnell, wenn zumindest eine gewisse Überlappung zwischen dem Bitmuster BM und dem Vergleichsmuster VM besteht. Zum Herbeiführen dieser minimalen Überlappung dient der Grobregler 48. Dieser spricht auf Grobsynchronisiersignale GS an, die regelmässig, insbesondere periodisch von der Takterzeugungseinheit 17 auf die Faser 11 ausgesandt werden. Als Grobsynchronisiersignal eignet sich beispielsweise eine kurze Sequenz mit einer Schwingung, deren Frequenz doppelt oder dreifach so hoch ist wie die Grundfrequenz einer (normalen) logischen Folge 010101.... Eine solche Sequenz lässt sich leicht durch den Grobregler mit Hilfe eines Filters erkennen und aus dem allgemeinen Bitstrom herausfiltern.

In anderer Ausbildung kann der Grobregler 48 auch so geartet sein, dass er die aufeinanderfolgenden Rahmen bzw. Pakete jeweils auf die Lage des jeweiligen Bitmusters BM hin absucht und schrittweise von Rahmen zu Rahmen seine Phasenlage δ gegenüber den Rahmen so lange ändert, bis er das Bitmuster BM entdeckt.

Ausser den bereits genannten Variationen seien noch folgende genannt:
Der Sequenzgeber 75 kann entweder so aufgebaut sein, dass er das jeweilige Vergleichsmuster VM gespeichert enthält und dieses jeweils gesteuert durch die Steuerung 69 und im Takt des Taktgebers 72 ausgibt. Statt dessen kann er es jeweils mittels eines geeigneten Algorithmusses neu generieren oder das Vergleichsmuster VM von einer nicht gezeigten Einheit empfangen und zum optischen Schaltglied 57 weiterleiten.

Der Regler und Bewerter 66 kann in einfachster Ausführung eine einfache Schwellenschaltung umfassen, z.B. eine monostabile Kippschaltung. Für die schnellere Suche des Korrelationsmaximums empfiehlt sich jedoch eine aufwendigere Schaltung, die mehrere Spannungswerte U miteinander vergleichen und beurteilen kann, z.B. zeitlich nacheinander auftretende Werte oder parallel zueinander auftretende, zeitgleiche Werte.

Die beschriebene Sync-Einheit 51 arbeitet mit sehr geringen Lichtleistungen und ist wesentlich robuster gegen Störungen, gegen Störgeräusche und gegenüber der erforderlichen Qualität der Licht-Bits als eine vergleichbare, rein elektronisch arbeitende Einheit. Dies beruht vor allem auf der ausgleichenden Funktion des Integrationsgliedes 63, welches auf Analogtechnik und nicht auf Digitaltechnik basiert. Hierdurch ergibt sich an einer entscheidenden Stelle der Anordnung eine Verminderung der erforderlichen Arbeitsgeschwindigkeit um wenigstens einen Faktor 4 bis 10.

Die genannten beispielsweisen Bit- BM und Vergleichsmuster VM können durch andere Muster bzw. Folgen ersetzt werden. Ein wichtiges Kriterium für ihre Güte bildet dabei die Anzahl erforderlicher Bits, d.h. die Länge der Muster. Die Bit- BM und Vergleichsmuster VM sollten - wie beschrieben - bis auf ihren Rand gleich sein. Es ist aber auch möglich, dass sie geringfügig voneinander abweichen, z.B. generell oder aufgrund von Jitter-Effekten oder ähnlichem.

Die Bitmuster BM können in jedem Paket, insbesondere in deren Kopfteilen enthalten sein. Sie können aber auch weniger häufig auf die Faser 11 ausgesendet werden, z.B. als Inhalt eines speziellen Pakettyps, der für Sonderaufgaben reserviert ist und beispielsweise nach jeweils hundert normalen Paketen erscheint.

Die Zugriffsknoten 12 können wie beschrieben an einer durchgehenden Faser 11 angeschlossen sein. Es ist aber auch möglich, die Sync-Einheit 51 in anderen Knoten einzusetzen, z.B. solchen, die den Lichtstrom jeweils elektrisch regenerieren.

Das Integrationsglied 63 kann mittels elektronischer Mittel, insbesondere empfindlicher und schneller Eingangsverstärker verschieden gestaltet sein. Hierbei baut die im optoelektrischen Wandler 60 freigesetzte elektrische Ladung e jeweils in der resultierenden Eingangskapazität des Verstärkers integrierend die genannte Spannung U auf.

## Patentansprüche

1. Bit- und Rahmensynchronisiereinheit (51) für einen Zugriffsknoten (12) einer optischen Übertragungseinrichtung (10),
. wobei die Übertragungseinrichtung (10) eine Mehrzahl unabhängiger Zugriffsknoten (12) aufweist, die seriell an eine optische Übertragungsfaser (11) angeschlossen sind,
. wobei auf dieser Faser (11) ein ununterbrochener, gerichteter Bitstrom in Form einer Hell/Dunkel-Folge und mit einem gegebenen Bittakt (BT) fliesst,
. wobei der Bitstrom durch einen Rahmentakt (RT) und diesem zugeordnete Signale gegliedert ist, und
. wobei jeder Zugriffsknoten (12) ausgerüstet ist zum Mitlesen und zum Empfang der auf der Faser (11) übertragenen Information,
gekennzeichnet für die Übertragungseinrichtung (10) als Ganzes
- durch eine Takterzeugungseinheit (17) und eine Sendeeinheit (16), welche die dem Rahmentakt (RT) zugeordneten Signale als stets gleiche, serielle Bitmuster (BM) auf die Übertragungsfaser (11) aussenden, und gekennzeichnet in jedem Zugriffsknoten (12)
- durch ein optisches Schaltglied (57), das elektrisch steuerbar ist, das einen optischen Eingang (53) und wenigstens einen optischen Ausgang (80, 81, 82) aufweist, das für jeden optischen Ausgang (80, 81, 82) eine erste Schaltstellung besitzt, bei der der Pfad zwischen dem Eingang (79) und dem jeweiligen Ausgang (80, 81, 82) für einen Lichtstrahl durchlässig ist und eine zweite Schaltstellung besitzt, bei der dieser Pfad für einen Lichtstrahl gesperrt ist, und in dessen Eingang (79) das serielle Bitmuster (BM), getragen durch einen Lichtstrahl, eingebbar ist,
- durch einen Sequenzgeber (75) zum elektrischen Steuern des optischen Schaltgliedes (57) im Takt (BT) des Taktgebers (72) und entsprechend dem logischen Wert des jeweiligen Bits eines Vergleichsmusters (VM), welches dem Bitmuster (BM) wenigstens weitgehend entspricht,
- durch eine der Anzahl Ausgänge (80, 81, 82) entsprechende Anzahl optoelektrischer Wandler (60, 60.1, 60.2), von denen jeder einem der Ausgänge (80, 81, 82) nachgeschaltet ist,
- durch eine entsprechende Anzahl elektrischer Integrationsglieder (63, 63.1, 63.2), von denen jedes einem optoelektrischen Wandler (60, 60.1, 60.2) nachgeschaltet ist zum Integrieren der von den Wandlern (60, 60.1, 60.2) jeweils abgegebenen elektrischen Ladung (e) und zur Abgabe von zu dieser Ladung (e) proportionalen Spannungswerten (U, U₁, U₂),
- durch einen den Integrationsgliedern (63, 63.1, 63.2) nachgeschalteten, elektronischen Regler und Bewerter (66) zum Bilden eines Regelsignals (RS) aus den Spannungswerten (U, U₁, U₂), und
- durch eine Steuerung (69) zum Steuern des Sequenzgebers (75), der Integrationsglieder (63, 63.1, 63.2) sowie des Reglers und Bewerters (66).

2. Bit- und Rahmensynchronisiereinheit (51) nach Anspruch 1,
dadurch gekennzeichnet,
dass das Schaltglied (57) als optischer Ein/Aus-Schalter mit einem einzigen Ausgang (80) ausgebildet ist.

3. Bit- und Rahmensynchronisiereinheit (51) nach Anspruch 1,
dadurch gekennzeichnet,
- dass das Schaltglied (57) als optischer Umschalter mit zwei Ausgängen (81, 82) ausgebildet ist, und
- dass zusätzlich eine Differenzbildungsstufe (85) vorgesehen ist, die zwischen die beiden Integrationsglieder (63.1, 63.2) und den Regler und Bewerter (66) geschaltet ist zur Bildung eines Differenzsignals (Udiff) aus den Spannungswerten (U₁, U₂).

4. Bit- und Rahmensynchronisiereinheit (51) nach Anspruch 1,
dadurch gekennzeichnet,
dass jeder optoelektrische Wandler (60. 60.1, 60.2) eine Fotodiode umfasst, deren Ausgangskapazität zusammen mit der Eingangskapazität eines nachgeschalteten Verstärkers das zugeordnete Integrationsglied (63, 63.1, 63.2) bildet.

5. Bit- und Rahmensynchronisationseinheit (51) nach Anspruch 1,
dadurch gekennzeichnet,
dass eine Steuerung (69) vorgesehen ist, die den Sequenzgeber (75), die Integrationsglieder (63, 63.1, 63.2) und den Regler und Bewerter (66) so steuert, dass der Sequenzgeber (75) das Vergleichmuster (VM) in stets optimaler Synchronisation gleichzeitig mit dem am Schaltglied (57) ankommenden Bitmuster (BM) abgibt.

6. Bit- und Rahmensynchronisiereinheit (51) nach Anspruch 1,
dadurch gekennzeichnet,
dass ein Grobregler (48) vorgesehen ist zum Herstellen einer Grobsynchronisierung (GS) zwischen dem Bitmuster (BM) und dem Vergleichsmuster (VM) und zur Abgabe eines zugeordneten Signals an die Steuerung (69).

7. Bit- und Rahmensynchronisiereinheit (51) nach Anspruch 6,
dadurch gekennzeichnet,
dass der Grobregler (48) ausgebildet ist zum Ansprechen auf eine Bitsequenz, deren Frequenz wenigstens doppelt so hoch ist wie die Grundfrequenz einer Folge von Bits, deren Wert abwechselnd logisch 0 und 1 ist.

8. Bit- und Rahmensynchronisiereinheit (51) nach Anspruch 6,
dadurch gekennzeichnet,
dass der Grobregler (48) ausgebildet ist zum schrittweisen Absuchen aufeinanderfolgender Rahmen, wobei von Schritt zu Schritt die Phasenlage zwischen Bitmuster (BM) und Vergleichsmuster (VM) variiert wird.

9. Bit- und Rahmensynchronisiereinheit (51) nach Anspruch 1 dadurch gekennzeichnet,
dass das Bitmuster (BM) und das Vergleichsmuster (VM) so ausgebildet sind, dass die Funktionsabhängigkeit der Höhe der resultierenden Spannungswerte (U, Udiff) von der Phasenabweichung (δ) zwischen den beiden Mustern (BM, VM) geschwungene, vom Maximum her gesehen konkave Flanken aufweist.

## Claims

1. Bit and frame synchronization unit (51) for an access node (12) of an optical transmission equipment (10),
- wherein the transmission equipment (10) comprises a plurality of independent access nodes (12) which are connected serially to an optical transmission fiber (11),
- wherein an uninterrupted, directed bit stream flows on this fiber (11) in the form of a brightness/darkness sequence and with a given bit clock (BT),
- wherein the bit stream is organized by means of a frame clock (RT) and signals assigned to the latter, and
- wherein each access node (12) is equipped for reading and receiving the information transmitted on the fiber (11), characterized for the transmission equipment (10) as a whole,
- by a clock generator unit (17)and a transmitter (16) which transmit the signals assigned to the frame clock (RT) as constantly identical serial bit patterns (BM) on the transmission fiber (11),
and characterized in each access node (12)
- by an optical switching element (57) which can be controlled electrically and comprises an optical input (53) and at least one optical output (80, 81, 82) having a first switching position for every optical output (80, 81, 82), in which first switching position the path between the input (79) and the respective output (80, 81, 82) permits a light beam flow, and having a second switching position in which this path is blocked for a light beam, and to its (57) input (79) the serial bit pattern (BM) can be fed carried by a light beam,
- by a sequence generator (75) for electrically controlling the optical switching element (57) in the clock (BT) of the clock generator (72) and corresponding to the logical value of the respective bit of a comparison pattern (VM) which corresponds, at least to a great extent, to the bit pattern (BM),
- by a number of optoelectrical transducers (60, 60.1, 60.2) corresponding to the number of outputs (80, 81, 82), each of which (60, 60.1, 60.2) is connected subsequent to one of the outputs (80, 81, 82),
- by a corresponding number of electrical integrators (63, 63.1, 63.2) each of which is connected subsequent to an optoelectrical transducer (60, 60.1, 60.2) for the purpose of integrating the electrical charge (e) transmitted by the transducers (60, 60.1, 60.2) and for transmitting voltage values (U, U1, U2) proportional to this charge (e),
- by an electronic regulator and evaluator (66) connected subsequent to the integrators (63, 63.1, 63.2) for forming a regulating signal (RS) from the voltage values (U, U1, U2), and
- by a control unit (69) for controlling the sequence generator (75), the integrators (63, 63.1, 63.2) and the regulator and evaluator (66).

2. Bit and frame synchronization unit (51) according to claim 1, characterized in
that the switching element (57) is constructed as an optical on/off switch with a single output (80).

3. Bit and frame synchronization unit (51) according to claim 1, characterized
- in that the switching element (57) is constructed as an optical reverse switch with two outputs (81, 82), and
- in that a subtraction stage (85) is provided in addition, which stage (85) is connected between the two integrators (63.1, 63.2 ) and the regulator and evaluator (66) for forming the differential signal (Udiff) from the voltage values (U1, U2).

4. Bit and frame synchronization unit (51) according to claim 1, characterized
in that each optoelectrical transducer (60, 60.1, 60.2) comprises a photodiode whose output capacitance, together with the input capacitance of a subsequently arranged amplifier, forms the assigned integrator (63, 63.1, 63.2).

5. Bit and frame synchronization unit (S1) according to claim 1, characterized
in that a control unit (69) is provided which controls the sequence generator (75), the integrators (63, 63.1, 63.2) and the regulator and evaluator (66) in such a way that the sequence generator (75) transmits the comparison pattern (VM) in constantly optimal synchronization at the same time as the bit pattern (BM) arriving at the switching element (57).

6. Bit and frame synchronization unit (51) according to claim 1, characterized
in that a coarse regulator (48) is provided for the production of a coarse synchronization (GS) between the bit pattern (BM) and the comparison pattern (VM) and for transmitting an assigned signal to the control unit (69).

7. Bit and frame synchronization unit (51) according to claim 6, characterized
in that the coarse regulator (48) is constructed for responding to a bit sequence whose frequency is at least twice as high as the base frequency of a sequence of bits whose value alternates between logical 0 and 1.

8. Bit and frame synchronization unit (51) according to claim 6, characterized
in that the coarse regulator (48) is constructed for the stepwise search of successive frames, wherein the phase relation between the bit pattern (BM) and comparison pattern (VM) is varied from step to step.

9. Bit and frame synchronization unit (51) according to claim 1, characterized
in that the bit pattern (BM) and the comparison pattern (VM) are constructed in such a way that the functional dependency of the level of the resultant voltage values (U, Udiff) on the phase deviation (δ) between the two patterns (BM, VM) has forced flanks which are concave as seen from the maximum.

## Revendications

1. Unité de synchronisation de bits et de blocs (51) pour un noeud d'accès (12) d'une installation de transmission optique (10),
- installation de transmission (10) ayant un grand nombre de noeuds d'accès (12) indépendants, branchés en série sur une fibre optique de transmission (11),
- cette fibre (11) est traversée par un flux de bits ininterrompu, dirigé, se présentant sous la forme d'une suite claire/sombre et d'une cadence de bits (BT) donnée,
- le flux de bits est subdivisé en élément par une cadence de blocs (RT) et les signaux associés,
- chaque noeud d'accès (12) est équipé pour lire et recevoir l'information transmise par les fibres (11),
- unité caractérisée en ce que pour l'installation de transmission (10) en tant que telle,
- une unité génératrice d'horloge (17) et une unité d'émission (16) émettent les signaux associés à la cadence de blocs (RT) comme modèle de bits (BM), série, égal, sur la fibre de transmission (11),
- et dans chaque noeud d'accès (12)
- un élément de commutation optique (57) à commande électrique qui possède une entrée optique (53) et au moins une sortie optique (80, 81, 82), possède pour chacune des sorties optiques (80, 81, 82) une première position de commutation pour laquelle le chemin entre l'entrée (79) et la sortie respective (80, 81, 82) est transparent pour un faisceau lumineux, et une seconde position de commutation pour laquelle ce chemin est bloqué par le faisceau lumineux et l'entrée (79) reçoit le modèle de bits (BM) série, véhiculé par un faisceau lumineux,
- un générateur de séquence (75) assure la commande électrique de l'élément de commutation optique (57) à la cadence (BT) de l'horloge (72) et en fonction de la valeur logique du bit respectif d'un modèle de comparaison (VM) qui correspond au moins dans une très large mesure au modèle de bits (BM) ;
- un nombre de convertisseurs optoélectriques (60, 60.1, 60.2) correspond au nombre des sorties (80, 81, 82), convertisseurs dont chacun est associé à l'une des sorties (80, 81, 82),
- un nombre approprié d'éléments d'intégration électriques (63, 63.1, 63.2) dont chacun est suivi par un convertisseur optoélectrique (60, 60.1, 60.2), est utilisé pour intégrer la charge électrique e fournie chaque fois les convertisseurs (60, 60.1, 60.2) et pour émettre par ceux-ci des valeurs de tension (U, U₁, U₂), proportionnelles à cette charge e,
- un circuit de régulation et d'exploitation (66), électronique, en aval des éléments d'intégration (63, 63.1, 63.2), forme un signal de régulation (RS) à partir des valeurs de tension U, U₁, U₂ et,
- une commande (69) sert à commander le générateur de séquence (75), l'élément d'intégration (63, 63.1, 63.2) ainsi que le circuit de régulation et d'exploitation (66).

2. Unité de synchronisation de bits et de blocs (51) selon la revendication 1, caractérisée en ce que l'élément de commutation (57) est un commutateur marche/arrêt, optique avec une seule sortie (80).

3. Unité de synchronisation de bits et de blocs (51) selon la revendication 1, caractérisée en ce que
- l'élément de commutation (57) en forme de commutateur optique a deux sorties (81, 82),
- en plus il est prévu un générateur de différence (85) entre les deux éléments d'intégration (63.1, 63.2) et le circuit de régulation et d'exploitation (66) pour former un signal de différence (Udiff) à partir des valeurs de tension (U₁, U₂).

4. Unité de synchronisation de bits et de blocs (51) selon la revendication 1, caractérisée en ce que chaque convertisseur optoélectrique (60, 60.1, 60.2) comprend une photodiode dont la capacité de sortie forme avec la capacité propre d'un amplificateur en aval, l'élément d'intégration (63, 63.1, 63.2) associé.

5. Unité de synchronisation de bits et de blocs (51) selon la revendication 1, caractérisée par une commande (69) qui commande le générateur de séquence (75), les éléments d'intégration (63, 63.1, 63.2) et le circuit de régulation et d'exploitation (66) pour que le générateur de séquence (75) émette le modèle de comparaison (VM) toujours avec une synchronisation optimale, en même temps que le modèle de bits (BM) arrivant de l'élément de commutation (57).

6. Unité de synchronisation de bits et de blocs (51) selon la revendication 1, caractérisée par un régulateur grossier (48) pour réaliser une synchronisation grossière (GS) entre le modèle de bits (BM) et le modèle de comparaison (VM) et pour émettre un signal correspondant à la commande (69).

7. Unité de synchronisation de bits et de blocs (51) selon la revendication 6, caractérisée en ce que le régulateur grossier (48) est conçu pour répondre à une séquence de bits dont la fréquence est au moins le double de la fréquence de base d'une succession de bits dont la valeur correspond à l'alternance de l'état logique 0 et de l'état logique 1.

8. Unité de synchronisation de bits et de blocs (51) selon la revendication 6, caractérisée en ce que le régulateur grossier (48) est réalisé pour rechercher pas à pas les blocs successifs, la position de phase entre le modèle de bits (BM) et le modèle de comparaison (VM) changeant d'un pas à l'autre.

9. Unité de synchronisation de bits et de blocs (51) selon la revendication 1, caractérisée en ce que le modèle de bits (BM) et le modèle de comparaison (VM) sont conçus pour que la relation fonctionnelle de l'amplitude de la valeur de tension résultante (U, Udiff) présente des flancs courbes, concaves, lorsqu'ils sont vus du maximum pour le déphasage δ entre les deux modèles (BM, VM).
